# EUROPEAN PATENT SPECIFICATION

(11) **EP 2 570 824 B1**
(45) Date of publication and mention of the grant of the patent: **08.03.2017**
(21) Application number: 11181768.0
(22) Date of filing: 19.09.2011
(51) Int. Cl.: G01V 3/10

(54) **Method for operating a metal detection apparatus and apparatus**
Verfahren für den Betrieb einer Metalldetektionsvorrichtung und Vorrichtung
Procédé de fonctionnement d'un appareil de détection de métal et appareil

(43) Date of publication of application: 20.03.2013
(73) Proprietor: Mettler-Toledo Safeline Limited, Salford Manchester M50 2XD (GB)
(72) Inventor: McAdam, Stephen, Warrington, WA3 6DJ (GB)
(74) Representative: Mettler-Toledo

(56) References cited:
- WO-A1-02/25318
- WO-A1-2008/006178
- DE-A1- 3 713 363
- US-A- 5 034 689

## Description

The present invention relates to a method for operating a metal detection apparatus and to a metal detection apparatus operating according to this method.

A metal detection apparatus is used to detect metal contamination in edible goods and other products. As described in WO 02/25318, modern metal apparatuses utilise a search head comprising a "balanced coil system" that is capable of detecting all metal contaminant types including ferrous, nonferrous and stainless steels in a large variety of products such as fresh and frozen products.

A metal detection apparatus that operates according to the "balanced coil"-principle typically comprises three coils that are wound onto a non-metallic frame, each exactly parallel with the other. The transmitter coil located in the centre is energised with a high frequency electric current that generates a magnetic field. The two coils on each side of the transmitter coil act as receiver coils. Since the two receiver coils are identical and installed with the same distance from the transmitter coil, an identical voltage is induced in each of them. In order to receive an output signal that is zero when the system is in balance, the first receiver coil is connected in series with the second receiver coil having an inversed sense of winding. Hence the voltages induced in the receiver coils, that are of identical amplitude and inverse polarity are cancelling out one another in the event that the system, in the absence of metal contamination, is in balance.

As a particle of metal passes through the coil arrangement, the high frequency field is disturbed first near one receiver coil and then near the other receiver coil. While the particle of metal is conveyed through the receiver coils the voltage induced in each receiver coil is changed typically in the range of Nano-volts. This change in balance results in a signal at the output of the receiver coils that can be processed, amplified and subsequently be used to detect the presence of the metal contamination in a product.

The signal processing channels split the received signal into two separate components that are 90° apart from one another. The resultant vector has a magnitude and a phase angle, which is typical for the products and the contaminants that are conveyed through the coils. In order to identify a metal contaminant, "product effects" need to be removed or reduced. If the phase of the product is known then the corresponding signal vector can be reduced. Eliminating unwanted signals from the signal spectrum thus leads to higher sensitivity for signals originating from contaminants.

Methods applied for eliminating unwanted signals from the signal spectrum therefore exploit the fact that the contaminants, the product and other materials, have different influences on the magnetic field so that the resulting signals differ in phase.

The signals caused by various metals or products, as they pass through the coils of the metal detection apparatus, can be split into two components, namely resistive and reactive components, according to conductivity and magnetic permeability of the measured object. The signal caused by ferrite is primarily reactive, while the signal from stainless steel is primarily resistive. Products, which are conductive typically cause signals with a strong resistive component.

Distinguishing between the phases of the signal components of different origin by means of a phase detector allows obtaining information about the product and the contaminants. A phase detector, e.g. a frequency mixer or analogue multiplier circuit, generates a voltage signal which represents the difference in phase between the signal input, such as the signal from the receiver coils, and a reference signal provided by the transmitter unit to the receiver unit. Hence, by selecting the phase of the reference signal to coincide with the phase of the product signal component, a phase difference and a corresponding product signal is obtained at the output of the phase detector that is zero. In the event that the phase of the signal components that originate from the contaminants differ from the phase of the product signal component, then the signal components of the contaminants can be detected. However in the event that the phase of the signal components of the contaminants is close to the phase of the product signal component, then the detection of contaminants fails, since the signal components of the contaminants are suppressed together with the product signal component.

In known systems the transmitter frequency is therefore selectable in such a way that the phase of the signal components of the metal contaminants will be out of phase with the product signal component.

A metal detection apparatus with two drive currents is known from WO2008006178.

GB2423366A discloses a metal detection apparatus that is designed to switch between at least two different operating frequencies such that any metal particle in a product will be subject to scanning at different frequencies. The frequency of operation is rapidly changed so that any metal particle passing through on a conveyor belt will be scanned at two or more different frequencies. In the event that for a first operating frequency the signal component caused by a metal particle is close to the phase of the signal component of the product and thus is masked, then it is assumed that for a second frequency, the phase of the signal component caused by the metal particle will differ from the phase of the signal component of the product so that this signal components can be distinguished. By switching between many frequencies, it is expected that one frequency will provide a suitable sensitivity for any particular metal type, size and orientation.

The drive circuit of the transmitter disclosed in GB2423366A comprises an electrically programmable logic device and a driver connected to four field effect transistors, which form a full wave bridge circuit with the transmitter coil connected across. For a particular coil system, a plurality of drive maps is stored in the electronically programmable logic device each containing a switching sequence for the switches for a respective predetermined frequency of operation of the apparatus. With the help of stored look-up tables the microprocessor can then select an appropriate map depending on the selected frequency of operation.

Storing, updating and selecting appropriate drive maps for a particular coil system requires considerable efforts that increase with the number of operating frequencies. The process of adapting and optimising the system for a specific application requires updating and enhancing the drive maps. In the event that the user changes the products to be tested and expects the appearance of metal contaminants that differ in sort and dimension from contaminants measured with the previous application, a laborious optimisation process needs to be performed.

The present invention is therefore based on the object of creating an improved method for operating a metal detection apparatus that uses one or more operating frequencies and to a metal detection apparatus operating according to this method.

Particularly, the present invention is based on the object of creating a metal detection apparatus that can easily, quickly and with high precision be adapted for any coil system to a specific application.

More particularly, the inventive method should allow adjustment of the drive current applied to the transmitter coil with reduced effort and high precision.

### SUMMARY OF THE INVENTION

The above and other objects of the present invention are achieved by a method for operating a metal detection as defined in claim 1 and to a metal detection apparatus as defined in claim 11.

The inventive method serves for operating a metal detection apparatus that comprises a transmitter unit with a drive circuit that alternately applies two different drive voltages via a first set of two drive switches to a first tail and via a second set of two drive switches to a second tail of a transmitter coil that is coupled to a receiver coil, which is connected to the input of a receiver unit.

According to the invention at least a first waveform is generated for controlling the first set of drive switches and at least a second waveform is generated for controlling the second set of drive switches, which first and second waveform that correspond to a selected operating frequency are shifted relative to one another in order to allow a desired drive current to flow through the transmitter coil.

With the inventive teaching a drive current can easily be generated for a selected operating frequency and with a level that can precisely be adjusted. Changes and adjustments can easily be performed so that the inventive method allows fast changes between different modes of operation. The transmitter can be changed from operating with a first operating frequency and a first level of the drive current to a second operating frequency with a second level of the drive current. The drive current can be adjusted in steps of a selectable resolution to a desired level practically within a clock cycle.

In order to obtain the required phase shift between the two waveforms only one waveform needs to be shifted in phase. Preferably both waveforms are shifted in opposite directions relative to one another, in order to keep the phase of the drive current constant.

The two waveforms provided each for the first and the second set of drive switches are preferably phase shifted by 180° relative to one another. In a preferred embodiment each drive switch is controlled individually with a dedicated waveform. In this way optimal control of the drive current can be obtained and malfunctions can be avoided.

The waveforms are shifted in steps having a step-length that preferably corresponds to the wavelength of the operating frequency divided by an integer n.

Most preferably segments of the polarity "0" or "1" corresponding to the waveforms are shifted, preferably rotated in a shift register with a clock frequency that is obtained by multiplying the integer n with the operating frequency so that the desired waveform is generated at the output of the shift registers.

In a preferred embodiment, segments are provided only for a half wave and are inverted for the second half wave thus allowing using a shorter shift registers. The segments exiting the shift registers are applied to an inverter, which provides segments with inverted polarity to the input of that shift register. Consequently segments of the first half wave and the second half wave are cycled in the shift register with the correct polarity.

Corresponding shift registers are set up for a selected shift resolution and are clocked with the clock frequency that corresponds to the operating frequency multiplied by integer n.

Said integer n is selected according to the applied operating frequency so that for a lower operating frequency a higher shift resolution and for a higher operating frequency a lower shift resolution is obtained.

The integer n is preferably selected in the range between 512 and 64 for operating frequencies in the range of 25 kHz and 250 kHz and in the range between 128 and 16 for operating frequencies in the range of 250 kHz and 1 MHz.

In preferred embodiments segments are provided with such a polarity and number that a waveform with a duty cycle of 50% is represented.

In a further preferred embodiment steps and means are provided, by which the closing of the first drive switch of a set of drive switches is avoided as long as a second drive switch of this switch set is still closed, since closing of both drive switches would lead to a short-circuit between the two drive voltages. This object is advantageously achieved by inverting at least the leading segment of a group of segments of a half cycle, for which a corresponding drive switch is closed, thus delaying activation of this drive switch for a corresponding time length. Inverting one or more segments provided in the shifted registers can be done with little effort. The delay corresponds to the number of the inverted segments and their time length, which corresponds to a period of the clock frequency provided to the shift registers. Alternatively the delay can be obtained by using a counter, which in response to an input signal provides an output signal after a predetermined number of clocks of the clock frequency have been counted. Most preferably the counter is programmable so that for each operating frequency a predetermined number of clocks and thus a predetermined delay can be selected.

### BRIEF DESCRIPTION OF THE DRAWING

Some of the objects and advantages of the present invention have been stated, others will appear when the following description is considered together with the accompanying drawing, in which:
- Fig. 1: shows a block diagram of an inventive metal detection apparatus that comprises a generator module 3 with at least two shift registers 32A, 32B used for controlling four drive switches 61A, 62A; 61B, 62B through which drive voltages VO, V1 are applied to a transmitter coil 101;
- Fig. 2a: shows the generator module 3 of figure 1 with the shift registers 32A, 32B filled with segments that represent waveforms w_{A}, w_{B} aligned in phase;
- Fig. 2b: shows the generator module 3 of figure 1 with the shift registers 32A, 32B filled with segments that represent waveforms w_{A}, w_{B} that are both shifted in phase relative to one another in opposite directions;
- Fig. 3: shows the generator module 3 of figure 1 in a preferred embodiment with the shift registers 32A, 32B filled with segments that represent only a half wave of the waveforms w_{A}, w_{B} and that are inverted each turn when circulating in the registers 32A, 32B;
- Fig. 4: shows the generator module 3 of figure 1 in a further preferred embodiment with a shift register 32_{A1}; 32_{A2}; 32_{B1}; 32_{B2} assigned to every drive switch 61A, 62B; 61B, 62B; and
- Fig. 5a: composite voltages U_{CA}, U_{CB} occurring in phase at the opposite tails of the transmitter coil 101 and the resulting drive current Ic, which is zero at this setting;
- Fig. 5b: the composite voltages U_{CA}, U_{CB} occurring out of phase at the opposite tails of the transmitter coil 101 and the resulting drive current Ic; and
- Fig. 5c: the composite voltages U_{CA}, U_{CB} occurring 180° out of phase at the opposite tails of the transmitter coil 101 and the resulting drive current Ic, which is at maximum value.

### DETAILED DESCRIPTION OF THE PREFERRED EMBODIMENTS

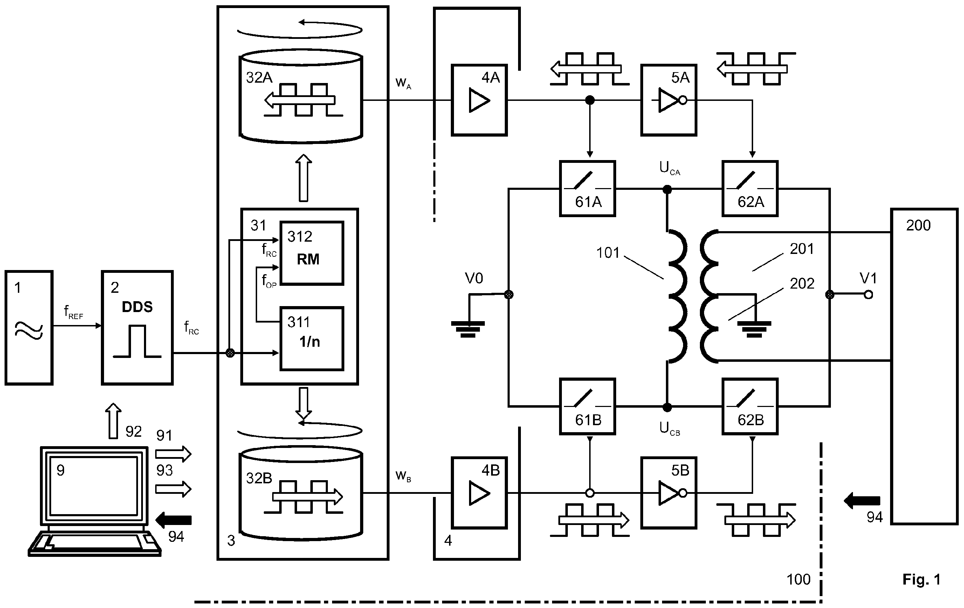

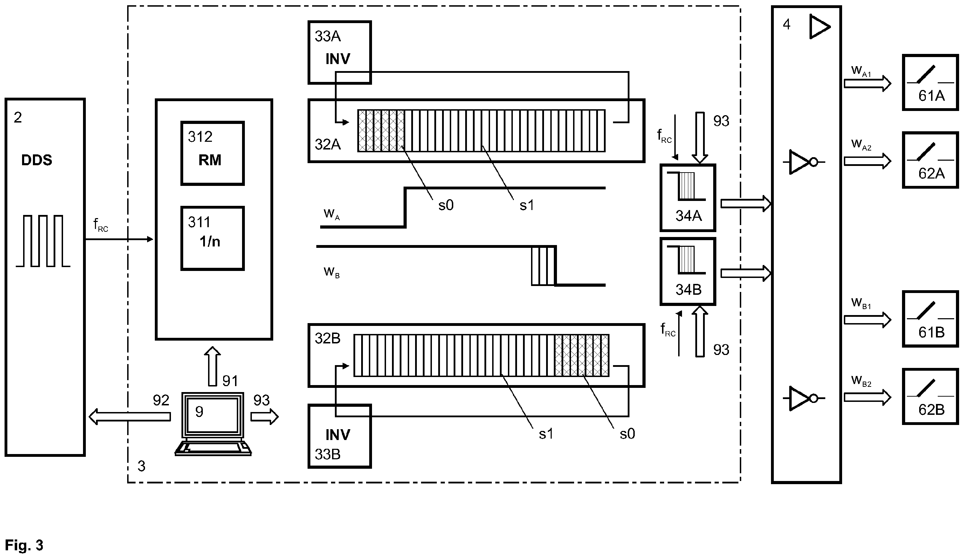

Figure 1 shows a block diagram of an inventive metal detection apparatus, which comprises a transmitter unit 100, a balanced coil system with a transmitter coil 101, a first and a second receiver coil 201, 202, a receiver unit 200 and a control unit 9 that comprises standard interfaces, input devices and output devices, a keyboard and a monitor. Signals that were received and processed during the operation of the metal detection apparatus are forwarded from the receiver unit 200 to the control unit 9, which further processes and displays the results of the measurement. The control unit 9 further controls the configuration and operation of the metal detection apparatus according to instructions entered by the user. Control signals are transferred via control lines or buses 91, 92, 93 to the different entities or modules of the transmitter unit 100 and the receiver unit 200 (see also figure 3). From the receiver unit 200, received and processed signals are forwarded via data bus 94 to the control unit 9, which further processes, displays and/or stores the results of the measurement processes.

The transmitter unit 100 comprises a frequency generator 1, preferably crystal oscillator that provides a reference frequency f_{REF} to a frequency synthesiser 2, preferably a direct digital synthesiser, which delivers a clock frequency f_{RC} to a generator module 3. The clock frequency f_{RC} is selected to be a multiple of the operating frequency f_{OP} of the metal detection apparatus.

The generator module 3 generates two control voltages with waveforms w_{A}, w_{B} that are forwarded via a common amplifier module 4 (see figure 3) or individual amplifier modules 4A, 4B and possibly two inverters 5A, 5B to a first set of drive switches 61A, 62A that are connected to one tail of a transmitter coil 101 and to a second set of drive switches 61B, 62B that are connected to the other tail of the transmitter coil 101. By the application of the control signals w_{A}, w_{B} the drive switches 61A, 62A; 61B, 62B of each drive set are alternately but never simultaneously connected to a first and to a second drive voltage V0 and V1, so that a short circuit is avoided. With the alternate connection of the drive voltages V0 and V1 to the tails of the transmitter coil 101, composite voltages U_{CA} and U_{CB} appear at both tails of the transmitter coil 101, which correspond to the waveforms w_{A}, w_{B} of the control voltages provided by the generator module 3.

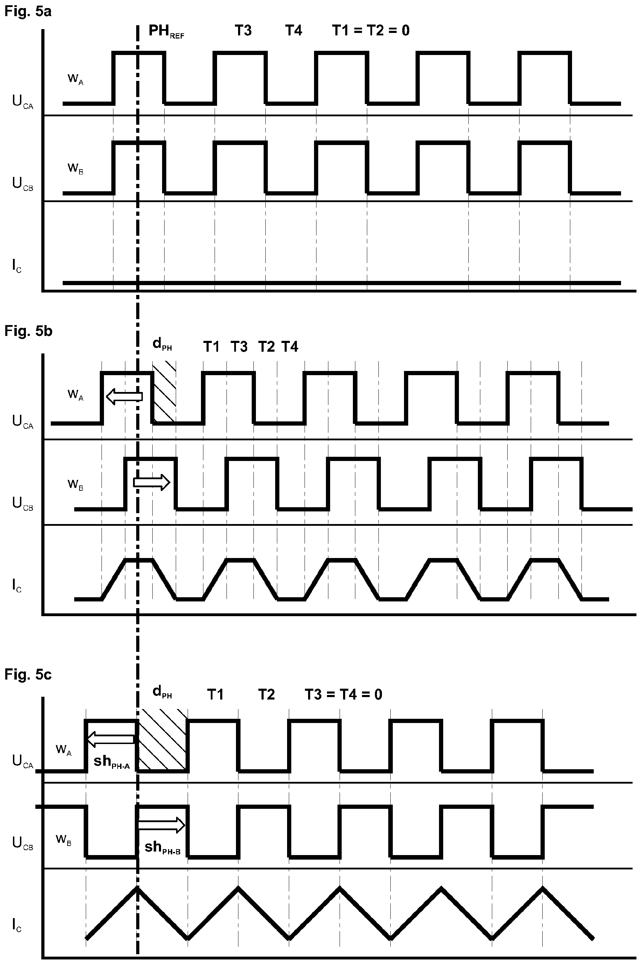

These composite voltages U_{CA} and U_{CB} are in phase as shown in figure 5a as long as the control voltages or waveforms w_{A}, w_{B}, are in phase, with the result that no drive current Ic is driven through the transmitter coil 101, since the difference of the two composite voltages U_{CA} and U_{CB} is zero. However, as soon as the waveforms w_{A}, w_{B}, and thus the composite voltages U_{CA} and U_{CB} are shifted relative to one another by a phase angle d_{PH1} as shown in figure 5b, then drive currents Ic start flowing in the transmitter coil 101. During periods T1, T2, in which the composite voltages U_{CA} and U_{CB} exhibit a difference, drive currents Ic of opposite polarity are introduced into the transmitter coil 101. In periods T3, T4 when the composite voltages U_{CA} and U_{CB} do not exhibit a difference, then the drive current Ic introduced into the transmitter coil 101 circulates across the closed drive switches 61A and 61B or 62A and 62B. In the event that the waveforms w_{A}, w_{B}, and thus the composite voltages U_{CA} and U_{CB} are shifted relative to one another by a phase angle of 180° as shown in figure 5c, then drive currents Ic of opposite polarity are introduced into the transmitter coil 101 during time periods T1, T2 that are of maximal length, while the time periods T3 and T4 are zero.

In order to avoid the short-circuit between the drive voltages V1, V0 simultaneous closing of both drive switches 61A and 62A or 61B and 62B is avoided by means of inverters 5A and 5B. By this measure it is ensured that the control voltages that the control input of the drive switches 61A and 62A or 61B and 62B are always of opposing polarity. By inverting the control voltages or waveforms w_{A}, w_{B}, that are applied to the second drive switch 62A; 62B of each switch set 61A, 61B or 62A, 62B alternating application of the drive voltages V0, V1 is achieved. The drive voltages V0, V1 can be of identical value but opposite polarity. In the present example drive the first voltage V0 is set to ground potential, while the second drive voltage V1 is set to a suitable value such as 24V.

As described above and shown in figures 5a, 5b and 5c a suitable drive current Ic can precisely be adjusted by shifting the waveforms w_{A}, w_{B} of the control signals relative to one another. Drive currents Ic will start to flow, when shifting the one or the other waveform w_{A}, w_{B}.

However in preferred embodiments both waveforms w_{A}, w_{B} are equally shifted relative to one another in opposite directions. As illustrated in figure 5c equivalent phase shifts sh_{PH-A} and shp_{H-B} are applied to both waveforms w_{A}, w_{B}, which correspond to the waveforms of the composite voltages U_{CA} and U_{CB}. As a result of equally shifting the waveforms w_{A}, w_{B} in opposite directions, the phase of the drive current Ic remains constant when changing the level of the drive current Ic (see the reference line PH_{REF} crossing figures 5a, 5b and 5c).

Preferably, the waveforms w_{A}, w_{B} are generated and shifted in the generator module 3 with the help of correspondingly configured shift registers 32A, 32B. With this means the task can be fulfilled efficiently without requiring costly signal processing means with which desirable waveforms could also be generated. The generator module 3 comprises a control module 31 which performs several tasks. With a divider module 311 the clock frequency f_{RC} provided by the frequency synthesiser 2, preferably a direct digital synthesiser DDS, is divided by an integer n in order to obtain the operating frequency f_{OP} of the metal detection apparatus.

When selecting the operating frequency f_{OP} the control unit 9 sets the clock frequency f_{RC} of the frequency synthesiser 2 to a value corresponding to the product of the multiplication of the operating frequency f_{OP} times the integer n (f_{RC} = f_{OP} * n).

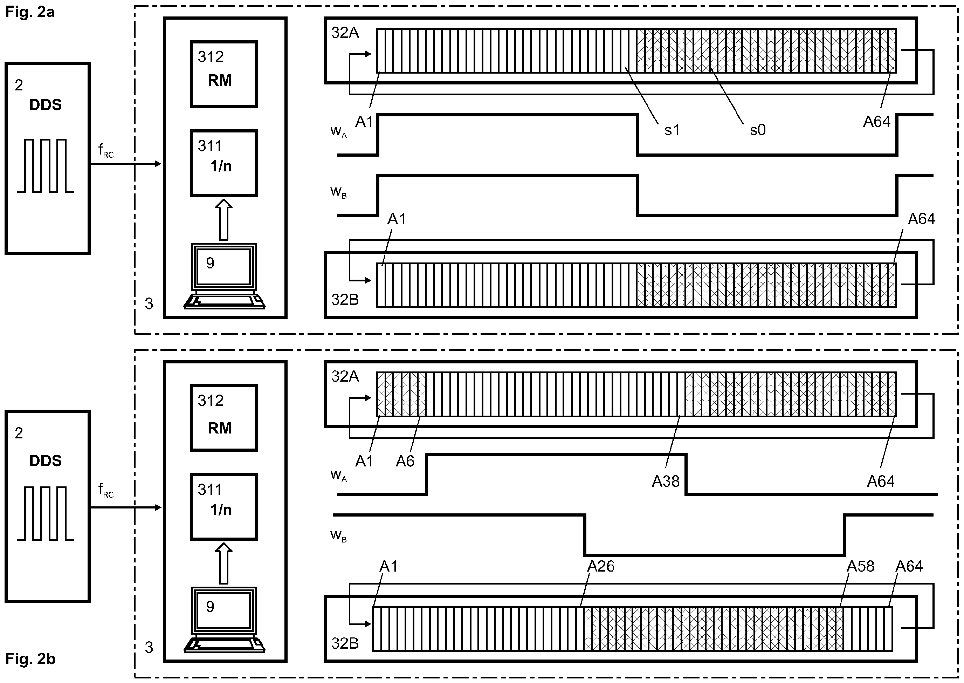

The integer n is selected in such a way that the waveforms w_{A}, w_{B} at the output of the generator module 3, which corresponds to the operating frequency f_{OP}, are divided into a number n of segments s1, s0 that are provided in the corresponding shift registers 32A, 32B as shown in figure 2a. Consequently, the clock frequency f_{RC} is used as the clock for the shift registers 32A, 32B. With the number of n clock signals a full wave of the waveforms w_{A}, w_{B} is generated by the generator module 3. Hence, with the clock frequency f_{RC} applied to the shift registers 32A, 32B and with the number n segments provided per full wave of the waveforms w_{A}, w_{B}, corresponding control signals are generated exhibiting the operating frequency f_{OP}.

The integer n therefore determines the resolution with which the waveforms w_{A}, w_{B} are shifted and the resolution with which the drive current Ic can be adjusted.

The integer n is selected according to the applied operating frequency f_{OP} so that preferably for a lower operating frequency f_{OP} a higher shift resolution and for a higher operating frequency f_{OP} a lower shift resolution is obtained.

The integer n is preferably selected in the range between 512 and 64 for operating frequencies f_{OP} in the range between 25 kHz and 250 kHz and in the range between 128 and 16 for operating frequencies f_{OP} in the range between 250 kHz and 1 MHz.

For example for the frequency band from 25 kHz to 28 kHz an integer n of 256, for the frequency band from 29 kHz to 250 kHz an integer n of 128, for the frequency band from 251 kHz to 500 kHz an integer n of 64 and for the frequency band from 501 kHz to 850 kHz an integer n of 32 can advantageously be applied.

In figure 2a two shift registers 32A and 32B have been created with a bit length of 64 bits that have been filled with 32 segments s1 having a polarity "1" and 32 segments s0 having a polarity "0". In both shift registers 32A, 32B, the segments s1 with the polarity "1" are located at addresses A1 to A32 and the segments s0 with the polarity "0" are located at addresses A33 to A64. Consequently the waveforms that are generated, i.e. that are leaving the shift registers 32A, 32B, are in phase. The composite voltages U_{CA} and U_{CB} are in phase and the drive current Ic through the transmitter coil 101 remains zero.

In figure 2b the segments s1, s0 in the first shift register 32A have been shifted by six segments s1, s0 to the right and the segments s1, s0 in the second shift register 32B have been shifted by six segments s1, s0 to the left. At the addresses A1-A6 and A39-A64 of the first shift register 32A segments s0 with the polarity "0" are provided while at the addresses A7-A38 segments s1 with the polarity "1" are provided. At the addresses A1-A26 and A59-A64 of the second shift register 32B segments s1 with the polarity "1" are provided while at the addresses A27-A58 segments s0 with the polarity "0" are provided. As further shown in figure 2b resulting waveforms w_{A}, w_{B} are generated that are shifted in opposite directions relative to one another, causing the corresponding drive current Ic to flow in the transmitter coil 101.

In this preferred embodiment the segments s1, s0 are circulated in the shift registers 32A, 32B. Hence, segments s1, s0 leaving the output of the shift registers 32A, 32B are sequentially forwarded to the input of the shift registers 32A, 32B and thus circulated.

In order to adjust a desired drive current Ic with the required step resolution shift registers 32A, 32B are set up with a bit length corresponding to selected integer n and are filled with segments s1, s0 that they are shifted against one another as required or shown as an example in figure 2b.

This task is performed by a management module 312 provided for the management of setting up and modifying the shift registers 32A, 32B according to the selected integer n and the desired drive current Ic.

In order to use shift registers 32A, 32B with reduced bit lengths the number n/2 of segments s1, s0 representing only a half cycle of the waveforms w_{A}, w_{B} are provided and circulated in the shift registers 32A, 32B in such a way that each segment s1, s0 that is emitted at the output is inverted or converted into a segment s0 s1 of opposite polarity before it is applied to input of the shift registers 32A, 32B. In this way a complete waveform is circulated in the registers 32A, 32B that however are only half in length.

As shown in figure 3 the segments s1, s0 leaving the output of the shift registers 32A, 32B are applied to an inverter 33A; 33B before they are applied to the input of the shift registers 32A, 32B. The segments s1, s0 leaving the output of the shift registers 32A, 32B are also forwarded to the input of an amplifier module 4, which amplifies or inverts and amplifies the received segments in order to generate waveforms of individual control signals w_{A1}, w_{A2}, w_{B1}, w_{B2} for each drive switch 61A, 62A, 61B, 62B.

In order to prevent the drive switches 61A, 62A or 61B, 62B on either side of the transmitter coil 101 turning on at the same time and shorting the drive voltage V0 and V1, a delay, preferably based on the clock frequency provided by the frequency generator 1, is provided, with which switching on of the drive switches 61A, 62A or 61B, 62B is delayed. This delay preferably corresponds to the characteristics of the drive switches 61A, 62A, 61B, 62B, namely the turn off delay and the fall time when input is removed. Hence, with the delay it is ensured that a drive switch 61A; 62A; 61B; 62B is completely switched off before the neighbouring drive switch 61A; 62A; 61B; 62B is turned on.

For example, switching on the drive switches 61A; 62A; 61B; 62B is delayed by five clock pulses of the clock frequency. At an operating frequency of 850 kHz and a shift register length of 32 bits, the clock frequency would be 27.2 MHz. With the length of one clock period of 36.8 ns at this frequency the resulting delay of five clock periods would then be 184 ns.

With an operating frequency of 25 kHz and a shift register length of 256 bit, the delay time resulting from five clock periods would be 781 ns, which would be too long. In order to maintain the delay close to a suitable delay of approximately 180 ns for typical power MOSFET switches, a multiple of the clock frequency may be provided by the frequency generator 1 providing shorter clock periods with which the delay can be selected.

A desired delay can be implemented with hardware circuitry or software.

Figure 3 shows the generator module 3 with two delay modules 34A and 34B, which delay the rising edge of a control signal w_{A1}, w_{A2}, w_{B1}, w_{B2} by a selectable number of clock periods of the clock frequency f_{RC}. The delay circuits 34A and 34B preferably comprise a counter, which counts clock cycles and which provides an output signal after a predetermined number of clock cycles has been counted. The delay modules 34A and 34B can be hardware modules or software modules.

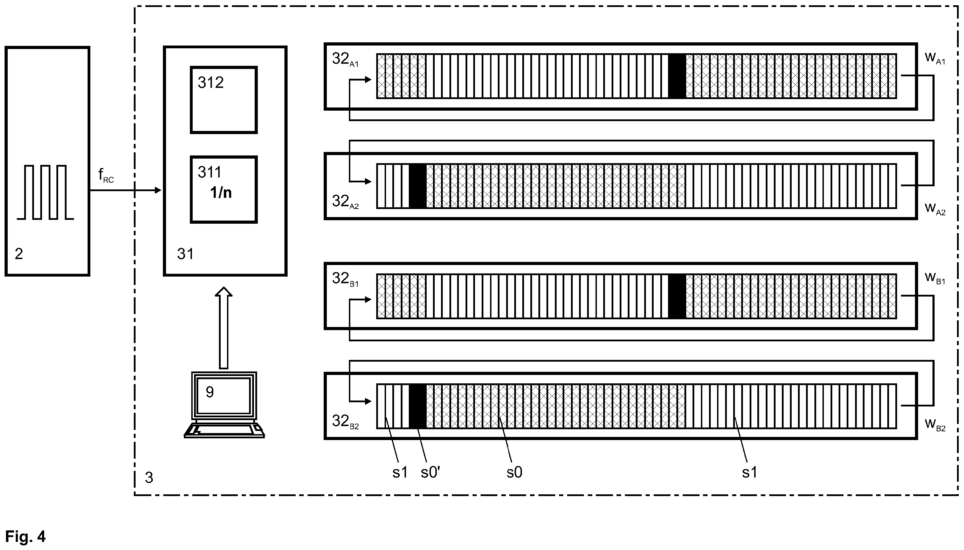

Figure 4 shows the generator module 3 of figure 1 in a further preferred embodiment with shift registers 32_{A1}; 32_{A2}; 32_{B1}; 32_{B2} assigned to every drive switch 61A, 62B; 61B, 62B. In this embodiment the delay is obtained by means of software provided in the management module 312 that is controlling the shift registers 32A, 32B. It is shown that, except for the segments s0' shown in black, the segments s1, s0 in the shift registers 32_{A1}, 32_{A2} and the shift registers 32_{B1}, 32_{B2} are of opposite polarity at the corresponding addresses. Consequently only one of the drive switches of a switch set 61A, 62A or 61B, 62B can be closed at a time. The two leading segments s0' of the group of segments s1 with the polarity "1" that would activate a drive switch 61A, 62B, 61B, 62B however have been reset to the opposite polarity, thus preventing activation of the corresponding drive switch 61A, 62A, 61B, 62B with the arrival of the first segment of the group of segments s1. Hence, activating a drive switch 61A, 62A, 61B, 62B can be delayed by a selectable number of segments s0' in order to avoid a connection between the two drive voltages V0, V1 during transition processes.

## Claims

1. Method for operating a metal detection apparatus comprising a transmitter unit (100) with a drive circuit (4) that alternately applies two different drive voltages (V0, V1) via a first set of two drive switches (61A, 62A) to a first tail and via a second set of two drive switches (61B, 62B) to a second tail of a transmitter coil (101) that is coupled to a receiver coil (201), which is connected to the input of a receiver unit (200), **characterised in that** at least a first waveform w_{A} is generated for controlling the first set of drive switches (61A, 62A) and at least a second waveform w_{B} is generated for controlling the second set of drive switches (61B, 62B), which first and second waveform w_{A}, w_{B} that correspond to a selected operating frequency are shifted relative to one another in steps having a length that corresponds to the wavelength of the operating frequency f_{OP} divided by an integer n, in order to allow a desired drive current I_{C} to flow through the transmitter coil (101).

2. Method according to claim 1, wherein the waveform w_{A} or w_{B} of the first or second set of drive switches (61A, 62A; 61B, 62B) is shifted relative to the other waveform w_{B} or w_{A} or wherein both waveforms w_{B} and w_{A} are shifted in opposite directions relative to one another.

3. Method according to claim 1 or 2, wherein for the control of each drive switch (61A, 62A; 61B, 62B) an individual waveform w_{A1}, w_{A2} and w_{B1}, w_{B2} is generated and wherein the waveforms w_{A1}, w_{A2} and w_{B1}, w_{B2} provided for the first and the second set of drive switches (61A, 62A; 61B, 62B) are preferably phase shifted by 180° relative to one another or adapted to control the related drive switch (61A; 62A; 61B; 62B) individually.

4. Method according to claim 1, 2 or 3, wherein segments s1, s0 of the polarity "0" or "1" corresponding to the waveforms w_{A}, w_{B} or w_{A1}, w_{A2} and w_{B1}, w_{B2} are shifted, preferably rotated in a shift register (32A, 32B; 32_{A1}, 32_{A2}, 32_{B1}, 32_{B2}) with a clock frequency f_{RC} that is obtained by multiplying the integer n with the operating frequency f_{OP} so that the desired waveform is generated at the output of the shift registers (32A, 32B; 32_{A1}, 32_{A2}, 32_{B1}, 32_{B2}).

5. Method according to claim 4, wherein the polarity of the segments s1, s0 is inverted for the half cycle of the waveforms w_{A}, w_{B} or w_{A1}, w_{A2} and w_{B1}, w_{B2}, thus allowing to use a shorter shift register (32A, 32B; 32_{A1}, 32_{A2}, 32_{B1}, 32_{B2}) that is provided with only a half wave of the waveform w_{A}, W_{B} or w_{A1}, W_{A2} and W_{B1}, w_{B2}.

6. Method according to one of the claims 1 to 5, wherein steps are provided, which inhibit a drive switch of each switch set (61A, 62A; 61B, 62B) to be closed as long as the other drive switch of the same switch set (61A, 62A; 61B, 62B) is still closed.

7. Method according to one of the claims 4 to 6, wherein the leading edge of the control signals or waveforms w_{A}, w_{B} or w_{A1}, w_{A2} and w_{B1}, w_{B2} that is closing a drive switch (61A; 62A; 61B; 62B) is delayed until the neighbouring drive switch (61A; 62A; 61B; 62B) is switched off.

8. Method according to claim 7, wherein the leading edge of the control signals or waveforms w_{A}, w_{B} or w_{A1}, w_{A2} and W_{B1}, w_{B2} that is closing a drive switch (61A; 62A; 61B; 62B) is delayed by means of a counter (34A; 34B), preferably a programmable counter, by a selectable number of clock pulses or wherein at least one of the leading segments s1 of a half cycle, for which a corresponding drive switch (61A; 62A; 61B; 62B) is closed, is inverted in polarity thus delaying activation of this drive switch (61A; 62A; 61B; 62B) for a corresponding time length.

9. Method according to one of the claims 3 to 8, wherein the integer n is selected according to the applied operating frequency f_{OP} so that for a lower operating frequency f_{OP} a higher shift resolution and for a higher operating frequency f_{OP} a lower shift resolution is obtained.

10. Method according to claim 9, wherein the integer n is selected in the range between 512 and 64 for operating frequencies f_{OP} in the range of 25kHz and 250 kHz and that the integer n is selected in the range between 128 and 16 for operating frequencies f_{OP} in the range of 250kHz and 1 MHz.

11. Metal detection apparatus operating according to a method as defined in one of the claims 1 to 10 comprising a transmitter unit (100) with frequency source (2) and a drive circuit (4) that is designed to alternately apply two different drive voltages (V0, V1) via a first set of two drive switches (61A, 62A) to a first tail and via a second set of two drive switches (61B, 62B) to a second tail of the transmitter coil (101) that is coupled to a receiver coil (201), which is connected to the input of a receiver unit (200), **characterised in that** a generator module (3), which is connected to a frequency source (2), is designed to generate at least a first waveform w_{A} for controlling the first set of drive switches (61A, 62A) or each drive switch (61A; 62A) and at least a second waveform w_{B} for controlling the second set of drive switches (61B, 62B) or each drive switch (61B; 62B), and is capable of shifting the first and second waveform w_{A}, w_{B} that correspond to a selected operating frequency f_{OP} relative to one another in steps having a length that corresponds to the wavelength of the operating frequency fₒₚ divided by an integer n, in order to allow a drive current I_{C} to flow through the transmitter coil (101).

12. Metal detection apparatus according to claim 11, wherein for each generated waveform w_{A}, w_{B} or w_{A1}, w_{A2} and w_{B1}, w_{B2} a shift register (32A, 32B; 32_{A1}, 32_{A2}, 32_{B1}, 32_{B2}) is provided that is filled with a number n or n/2 segments s1, s0 of the corresponding waveform w_{A}, w_{B} or w_{A1}, w_{A2}, w_{B1}, w_{B2}, said segments s1, s0 preferably constituting a full wave or a half wave and being circled or inverted and circled in said shift register (32A, 32B; 32_{A1}, 32_{A2}, 32_{B1}, 32_{B2}) with a clock frequency f_{RC} that is n times higher than the operating frequency f_{OP} which preferably corresponds to the frequency of the frequency source (2).

13. Metal detection apparatus according to claim 11 or 12, wherein means are provided, which inhibit a drive switch of each switch set (61A, 62A; 61B, 62B) to be closed as long as the other drive switch of the same switch set (61A, 62A; 61B, 62B) is still closed.

14. Metal detection apparatus according to claim 13, wherein the shift register (32A, 32B; 32_{A1}, 32_{A2}, 32_{B1}, 32_{B2}) are filled with a number x segments s1 of the polarity "1" and with a number y segments s1 of the polarity "0", wherein the numbers are even more selected in such a way that at least one of the leading segments s1 of a half cycle, for which a corresponding drive switch (61A; 62A; 61B; 62B) is closed, is inverted in polarity thus delaying activation of this drive switch (61A; 62A; 61B; 62B) for a corresponding time length.

## Patentansprüche

1. Verfahren zum Betreiben einer Metalldetektionsvorrichtung, die eine Sendereinheit (100) mit einem Antriebskreis (4) umfasst, der abwechselnd zwei unterschiedliche Antriebsspannungen (V0, V1) über einen ersten Satz von zwei Antriebsschaltern (61A, 62A) an ein erstes Ende und über einen zweiten Satz von zwei Antriebsschaltern (61 B, 62B) an ein zweites Ende einer Senderspule (101) anlegt, die mit einer Empfängerspule (201) gekoppelt ist, die mit dem Eingang einer Empfängereinheit (200) verbunden ist, **dadurch gekennzeichnet, dass** zumindest eine erste Wellenform w_{A} zum Steuern des ersten Satzes von Antriebsschaltern (61A, 62A) und zumindest eine zweite Wellenform w_{B} zum Steuern des zweiten Satzes von Antriebsschaltern (61B, 62B) erzeugt wird, wobei die erste und die zweite Wellenform w_{A}, w_{B}, die einer ausgewählten Betriebsfrequenz entsprechen, relativ zueinander in Schritten verschoben werden, die eine Länge aufweisen, die der Wellenlänge der Betriebsfrequenz f_{OP} geteilt durch eine ganze Zahl n entspricht, um zu ermöglichen, dass ein gewünschter Antriebsstrom I_{C} durch die Senderspule (101) strömt.

2. Verfahren nach Anspruch 1, wobei die Wellenform w_{A} oder w_{B} des ersten oder zweiten Satzes von Antriebsschaltern (61A, 62A; 61B, 62B) relativ zu der anderen Wellenform w_{B} oder w_{A} verschoben wird oder wobei beide Wellenformen w_{B} und w_{A} relativ zueinander in entgegengesetzte Richtungen verschoben werden.

3. Verfahren nach Anspruch 1 oder 2, wobei zum Steuern jedes Antriebsschalters (61A, 62A; 61B, 62B) eine individuelle Wellenform w_{A1}, w_{A2} und w_{B1}, w_{B2} erzeugt wird und wobei die für den ersten und den zweiten Satz von Antriebsschaltern (61A, 62A; 61B, 62B) bereitgestellten Wellenformen w_{A1}, w_{A2} und w_{B1}, w_{B2} vorzugsweise relativ zueinander um 180° phasenverschoben werden oder dazu ausgelegt werden, den zugehörigen Antriebsschalter (61A; 62A; 61B; 62B) einzeln zu steuern.

4. Verfahren nach Anspruch 1, 2 oder 3, wobei Segmente s1, s0 mit der Polarität "0" oder "1", die den Wellenformen w_{A}, w_{B} oder w_{A1}, w_{A2} und w_{B1}, w_{B2} entsprechen, in einem Schieberegister (32A, 32B; 32_{A1}, 32_{A2}, 32_{B1}, 32_{B2}) mit einer Taktfrequenz f_{RC} verschoben, vorzugsweise gedreht, werden, die durch Multiplizieren der ganzen Zahl n mit der Betriebsfrequenz f_{OP} erhalten wird, so dass die gewünschte Wellenform am Ausgang des Schieberegisters (32A, 32B; 32_{A1}, 32_{A2}, 32_{B1}, 32_{B2}) erzeugt wird.

5. Verfahren nach Anspruch 4, wobei die Polarität der Segmente s1, s0 für den halben Zyklus der Wellenformen w_{A}, w_{B} oder w_{A1}, w_{A2} und w_{B1}, w_{B2} wechselgerichtet wird, was es ermöglicht, ein kürzeres Schieberegister (32A, 32B; 32_{A1}, 32_{A2}, 32_{B1}, 32_{B2}) zu verwenden, dem nur eine halbe Welle der Wellenform w_{A}, w_{B} oder w_{A1}, w_{A2} und w_{B1}, w_{B2} bereitgestellt wird.

6. Verfahren nach einem der Ansprüche 1 bis 5, wobei Schritte bereitgestellt werden, die verhindern, dass ein Antriebsschalter jedes Schaltersatzes (61A, 62A; 61B, 62B) geschlossen wird, solange der andere Antriebsschalter desselben Schaltersatzes (61A, 62A; 61B, 62B) noch geschlossen ist.

7. Verfahren nach einem der Ansprüche 4 bis 6, wobei die Vorderflanke des Steuersignals oder der Wellenformen w_{A}, w_{B} oder w_{A1}, w_{A2} und w_{B1}, w_{B2}, die einen Antriebsschalter (61A; 62A; 61B; 62B) schließt, verzögert wird, bis der benachbarte Antriebsschalter (61A; 62A; 61B; 62B) ausgeschaltet wird.

8. Verfahren nach Anspruch 7, wobei die Vorderflanke des Steuersignals oder der Wellenformen w_{A}, w_{B} oder w_{A1}, w_{A2} und w_{B1}, w_{B2}, die einen Antriebsschalter (61A; 62A; 61B; 62B) schließt, mittels eines Zählers (34A; 34B), vorzugsweise einem programmierbaren Zähler, durch eine auswählbare Anzahl an Taktsignalen verzögert wird, oder wobei zumindest eines der vorderen Segmente s1 eines halben Zyklus, bei dem ein entsprechender Antriebsschalter (61A; 62A; 61B; 62B) geschlossen ist, bezüglich der Polarität wechselgerichtet wird, wodurch die Aktivierung dieses Antriebsschalters (61A; 62A; 61B; 62B) für eine entsprechende Zeitdauer verzögert wird.

9. Verfahren nach einem der Ansprüche 3 bis 8, wobei die ganze Zahl n gemäß der angewandten Betriebsfrequenz f_{OP} ausgewählt wird, so dass bei einer niedrigeren Betriebsfrequenz f_{OP} eine höhere Verschiebungsauflösung und bei einer höheren Betriebsfrequenz f_{OP} eine niedrigere Verschiebungsauflösung erhalten wird.

10. Verfahren nach Anspruch 9, wobei die ganze Zahl n für Betriebsfrequenzen f_{OP} im Bereich von 25 kHz und 250 kHz im Bereich zwischen 512 und 64 ausgewählt wird und wobei die ganze Zahl n für Betriebsfrequenzen f_{OP} im Bereich von 250 kHz und 1 MHz im Bereich zwischen 128 und 16 ausgewählt wird.

11. Metalldetektionsvorrichtung, die gemäß einem Verfahren, wie in einem der Ansprüche 1 bis 10 definiert, betrieben wird und eine Sendereinheit (100) mit einer Frequenzquelle (2) und einen Antriebskreis (4) umfasst, der dazu ausgelegt ist, abwechselnd zwei unterschiedliche Antriebsspannungen (V0, V1) über einen ersten Satz von zwei Antriebsschaltern (61A, 62A) an ein erstes Ende und über einen zweiten Satz von zwei Antriebsschaltern (61B, 62B) an ein zweites Ende der Senderspule (101) anzulegen, die mit einer Empfängerspule (201) gekoppelt ist, die mit dem Eingang einer Empfängereinheit (200) verbunden ist, **dadurch gekennzeichnet, dass** ein Generatormodul (3), das mit einer Frequenzquelle (2) verbunden ist, dazu ausgelegt ist, zumindest eine erste Wellenform w_{A} zum Steuern des ersten Satzes von Antriebsschaltern (61A, 62A) oder jedes Antriebsschalters (61A; 62A) und zumindest eine zweite Wellenform w_{B} zum Steuern des zweiten Satzes von Antriebsschaltern (61B, 62B) oder jedes Antriebsschalters (61B; 62B) zu erzeugen, und dazu in der Lage ist, die erste und die zweite Wellenform w_{A}, w_{B}, die einer ausgewählten Betriebsfrequenz f_{OP} entsprechen, relativ zueinander in Schritten zu verschieben, die eine Länge aufweisen, die der Wellenlänge der Betriebsfrequenz f_{OP} geteilt durch eine ganze Zahl n entspricht, um zu ermöglichen, dass ein Antriebsstrom I_{C} durch die Senderspule (101) strömt.

12. Metalldetektionsvorrichtung nach Anspruch 11, wobei für jede erzeugte Wellenform w_{A}, w_{B} oder w_{A1}, w_{A2} und w_{B1}, w_{B2}, ein Schieberegister (32A, 32B; 32_{A1}, 32_{A2}, 32_{B1}, 32_{B2}) bereitgestellt wird, das mit einer Anzahl n oder n/2 von Segmenten s1, s0 der entsprechenden Wellenform w_{A}, w_{B} oder w_{A1}, w_{A2} und w_{B1}, w_{B2}, gefüllt ist, wobei die Segmente s1, s0 vorzugsweise eine gesamte Welle oder eine halbe Welle darstellen und in dem Schieberegister (32A, 32B; 32_{A1}, 32_{A2}, 32_{B1}, 32_{B2}) mit einer Taktfrequenz f_{RC} umkreist oder wechselgerichtet und umkreist werden, die n-mal höher ist als die Betriebsfrequenz f_{OP}, die vorzugsweise der Frequenz der Frequenzquelle (2) entspricht.

13. Metalldetektionsvorrichtung nach Anspruch 11 oder 12, wobei Mittel vorgesehen sind, die verhindern, dass ein Antriebsschalter jedes Schaltersatzes (61A, 62A; 61B, 62B) geschlossen wird, solange der andere Antriebsschalter desselben Schaltersatzes (61A, 62A; 61B, 62B) noch geschlossen ist.

14. Metalldetektionsvorrichtung nach Anspruch 13, wobei die Schieberegister (32A, 32B; 32_{A1}, 32_{A2}, 32_{B1}, 32_{B2}) mit einer Anzahl x von Segmenten s1 mit der Polarität "1" und mit einer Anzahl y von Segmenten s1 mit der Polarität "0" gefüllt sind, wobei die Zahlen insbesondere so ausgewählt sind, dass zumindest eines der vorderen Segmente s1 eines halben Zyklus, bei dem ein entsprechender Antriebsschalter (61A; 62A; 61B; 62B) geschlossen ist, bezüglich der Polarität wechselgerichtet wird, wodurch die Aktivierung dieses Antriebsschalters (61A; 62A; 61B; 62B) für eine entsprechende Zeitdauer verzögert wird.

## Revendications

1. Procédé pour le fonctionnement d'un appareil de détection de métaux comprenant une unité émettrice (100) avec un circuit de commande (4) appliquant alternativement deux tensions de commande (V0, V1) différentes par le biais d'un premier ensemble de deux commutateurs de commande (61A, 62A) à une première queue et par le biais d'un deuxième ensemble de deux commutateurs de commande (61B, 62B) à une deuxième queue d'une bobine émettrice (101) couplée à une bobine réceptrice (201), laquelle est reliée à l'entrée d'une unité réceptrice (200), **caractérisé en ce qu'**au moins une première forme d'onde w_{A} est générée pour commander le premier ensemble de commutateurs de commande (61A, 62A) et au moins une deuxième forme d'onde w_{B} est générée pour commander le deuxième ensemble de commutateurs de commande (61B, 62B), lesdites première et deuxième formes d'onde w_{A}, w_{B} correspondant à une fréquence de fonctionnement sélectionnée étant décalées l'une par rapport à l'autre selon des échelons présentant une longueur correspondant à la longueur d'onde de la fréquence de fonctionnement f_{OP} divisée par un entier n, afin de permettre à un courant de commande souhaité I_{C} de passer à travers la bobine émettrice (101).

2. Procédé selon la revendication 1, dans lequel la forme d'onde w_{A} ou w_{B} des premier et deuxième ensembles de commutateurs de commande (61A, 62A ; 61B, 62B) est décalée par rapport à l'autre forme d'onde w_{B} ou w_{A}, ou dans lequel les deux formes d'onde w_{A}, w_{B} sont décalées dans des directions opposées l'une par rapport à l'autre.

3. Procédé selon la revendication 1 ou 2, dans lequel, pour la commande de chaque commutateur de commande (61A, 62A ; 61B, 62B), une forme d'onde individuelle w_{A1}, w_{A2} et w_{B1}, w_{B2} est générée, et dans lequel les formes d'onde w_{A1}, w_{A2} et w_{B1}, w_{B2} fournies pour les premier et deuxième ensembles de commutateurs de commande (61A, 62A ; 61B, 62B) sont de préférence décalées en phase de 180°les unes par rapport aux autres, ou adaptées pour commander individuellement le commutateur de commande (61A ; 62A ; 61B ; 62B) concerné.

4. Procédé selon la revendication 1, 2 ou 3, dans lequel des segments s1, s0 de la polarité « 0 » ou « 1 » correspondant aux formes d'onde w_{A}, w_{B} ou w_{A1}, w_{A2} et w_{B1}, w_{B2} sont décalés, de préférence tournés dans un registre à décalage (32A, 32B ; 32A1, 32A2, 32B1, 32B2) avec une fréquence d'horloge f_{RC} obtenue en multipliant l'entier n par la fréquence de fonctionnement f_{OP}, de sorte que la forme d'onde souhaitée est générée à la sortie des registres à décalage (32A, 32B ; 32A1, 32A2, 32B1, 32B2).

5. Procédé selon la revendication 4, dans lequel la polarité des segments s1, s0 est inversée pour le demi-cycle des formes d'onde w_{A}, w_{B} ou w_{A1}, w_{A2} et w_{B1}, w_{B2}, permettant ainsi d'utiliser un registre à décalage (32A, 32B ; 32A1, 32A2, 32B1, 32B2) plus court doté seulement d'une demi-onde de la forme d'onde w_{A}, w_{B} ou w_{A1}, w_{A2} et w_{B1}, w_{B2}.

6. Procédé selon l'une des revendications 1 à 5, dans lequel il est prévu des étapes permettant d'empêcher la fermeture d'un commutateur de commande de chaque ensemble de commutateurs (61A, 62A ; 61B, 62B) tant que l'autre commutateur de commande du même ensemble de commutateurs (61A, 62A ; 61B, 62B) reste fermé.

7. Procédé selon l'une des revendications 4 à 6, dans lequel le bord avant des signaux de commande ou des formes d'onde w_{A}, w_{B} ou w_{A1}, w_{A2} et w_{A1}, w_{B2} fermant un commutateur de commande (61A, 62A ; 61B, 62B) est retardé jusqu'à ce que le commutateur de commande (61A, 62A ; 61B, 62B) voisin soit éteint.

8. Procédé selon la revendication 7, dans lequel le bord avant des signaux de commande ou des formes d'onde w_{A}, w_{B} ou w_{A1}, w_{A2} et w_{B1}, w_{B2} fermant un commutateur de commande (61A, 62A ; 61B, 62B) est retardé à l'aide d'un compteur (34A ; 34B), de préférence un compteur programmable, selon un nombre au choix d'impulsions d'horloge, ou dans lequel au moins l'un des segments avant s1 d'un demi-cycle, pour lequel un commutateur de commande (61A, 62A ; 61B, 62B) correspondant est fermé, est inversé en polarité, retardant ainsi l'activation de ce commutateur de commande (61A, 62A ; 61B, 62B) pour une durée correspondante.

9. Procédé selon l'une des revendications 3 à 8, dans lequel l'entier n est sélectionné en fonction de la fréquence de fonctionnement f_{OP} appliquée, de manière à obtenir une résolution de déphasage plus élevée pour une fréquence de fonctionnement f_{OP} plus basse et une résolution de déphasage plus faible pour une fréquence de fonctionnement f_{OP} plus élevée.

10. Procédé selon la revendication 9, dans lequel l'entier n est sélectionné dans la plage comprise entre 512 et 64 pour des fréquences de fonctionnement f_{OP} dans la plage de 25kHz à 250kHz, et en ce que l'entier n est sélectionné dans la plage comprise entre 128 et 16 pour des fréquences de fonctionnement f_{OP} dans la plage de 250kHz à 1 MHz.

11. Appareil de détection de métaux fonctionnant conformément à un procédé selon l'une des revendications 1 à 10, comprenant une unité émettrice (100) avec une source de fréquence (2) et un circuit de commande (4) conçu pour appliquer alternativement deux tensions de commande (V0, V1) différentes par le biais d'un premier ensemble de deux commutateurs de commande (61A, 62A) à une première queue et par le biais d'un deuxième ensemble de deux commutateurs de commande (61B, 62B) à une deuxième queue de la bobine émettrice (101), laquelle est couplée à une bobine réceptrice (201) reliée à l'entrée d'une unité réceptrice (200), **caractérisé en ce qu'**un module générateur (3) relié à une source de fréquence (2) est conçu pour générer au moins une première forme d'onde w_{A} pour la commande du premier ensemble de commutateurs de commande (61A, 62A) ou chaque commutateur de commande (61A, 62A) et au moins une deuxième forme d'onde w_{B} pour la commande du deuxième ensemble de commutateurs de commande (61B, 62B) ou chaque commutateur de commande (61B ; 62B), tout en étant capable de décaler les première et deuxième formes d'onde w_{A}, w_{B} correspondant à une fréquence de fonctionnement f_{OP} sélectionnée, l'une par rapport à l'autre selon des échelons présentant une longueur correspondant à la longueur d'onde de la fréquence de fonctionnement f_{OP} divisée par un entier n, afin de permettre à un courant de commande I_{C} de passer à travers la bobine émettrice (101).

12. Appareil de détection de métaux selon la revendication 11, dans lequel, pour chaque forme d'onde w_{A}, w_{B} ou w_{A1}, w_{A2} et w_{B1}, w_{B2} générée, il est prévu un registre à décalage (32A, 32B ; 32A1, 32A2, 32B1, 32B2) rempli avec un nombre n ou n/2 de segments s1, s0 de la forme d'onde w_{A}, w_{B} ou w_{A1}, w_{A2} et w_{B1}, w_{B2} correspondante, lesdits segments s1, s0 constituant de préférence une onde entière ou une demi-onde et étant encerclés ou inversés et encerclés dans ledit registre à décalage (32A, 32B ; 32A1, 32A2, 32B1, 32B2) avec une fréquence d'horloge f_{RC} n fois supérieure à la fréquence de fonctionnement f_{OP} correspondant de préférence à la fréquence de la source de fréquence (2).

13. Appareil de détection de métaux selon la revendication 11 ou 12, dans lequel il est prévu des moyens empêchant la fermeture d'un commutateur de commande de chaque ensemble de commutateurs (61A, 62A ; 61B, 62B) tant que l'autre commutateur de commande du même ensemble de commutateurs (61A, 62A ; 61B, 62B) reste fermé.

14. Appareil de détection de métaux selon la revendication 13, dans lequel les registres à décalage (32A, 32B ; 32A1, 32A2, 32B1, 32B2) sont remplis avec un nombre x de segments s1 de la polarité « 1 » et avec un nombre y de segments s1 de la polarité « 0 », dans lequel les nombres sont encore davantage sélectionnés de manière à ce qu'au moins l'un des segments avant s1 d'un demi-cycle, pour lequel un commutateur de commande (61A, 62A ; 61B, 62B) correspondant est fermé, est inversé en polarité, retardant ainsi l'activation de ce commutateur de commande (61A, 62A ; 61B, 62B) pour une durée correspondante.
